# EUROPEAN PATENT APPLICATION

(11) **EP 0 794 604 A2**
(43) Date of publication of application: **10.09.1997**
(21) Application number: 97102620.8
(22) Date of filing: 19.02.1997
(51) Int. Cl.: H02H 3/08, H04B 1/16

(54) **Overcurrent protector**

(30) Priority: 06.03.1996 SE 9600874
(71) Applicant: NOKIA TECHNOLOGY GmbH, 75175 Pforzheim (DE)
(72) Inventor: Davidsson, Birger, 591 61 Motala (SE)

(57) **Abstract**

The invention relates to an overcurrent protection in a satellite receiver or the like, which receiver includes a power supply unit (2) that is arranged for the operation of a voltage regulator (3) or a switching unit supplying an LNB, for example, as well as a microprocessor (5). The protection is arranged such that the operation of the microprocessor (5) continues in case of an overcurrent detected, while the operation of the voltage regulator (3) or the switching unit is stopped.

## Description

### Technical field

This invention relates to an overcurrent protector in a satellite receiver or the like for protecting the output to, for example, an LNB (Low Noise Block converter) against overload, as the result of an overcurrent of the satellite receiver, for example owing to a short-circuit.

### Prior art

To receive radio frequency signals, which are transmitted via a satellite, a so-called outdoor unit, usually an LNB, as well as an indoor unit, a satellite receiver, are used. Generally, a satellite receiver supplies the LNB with current via a switching element and a voltage regulator. Usually, a microprocessor unit is also connected to the satellite receiver for the control and supervision of the receiving system. In such systems it happens that cables are short-circuited or that other faults appear during the installation of the aerial, so that the output for the LNB in the satellite receiver is overloaded. To avoid damages of the system to occur, the current supply must be interrupted.

Till now, also the function of the microprocessor controlling the satellite receiver has been interrupted in case of an overcurrent, for example by a current-limiting circuit followed by a series of reset pulses from the current-limiting circuit, or by a switching the energy supply off in case of a detected overcurrent. The disadvantage of such a process is that the microprocessor has to be restarted and after that go through the complete start up procedure every time an overcurrent is detected.

### Description of the invention

The object of the invention is to solve the problems mentioned above in case of an overcurrent in, for example, a satellite receiver. This is achieved by means of a special protection circuit connected between a power supply unit, which is arranged for the operation of a voltage regulator for the LNB voltage, as well as for the operation of a microcomputer that is used in the satellite receiver. According to the invention the power supply is arranged to continue the operation of the microprocessor in case of a detected overcurrent, but to disconnect the voltage regulator via a current-limiting latching circuit. According to one embodiment of the invention the overcurrent is detected in a current-limiting comparator which compares the current from the power supply unit with a limit value. If the limit value is exceeded, the voltage regulator is switched off via a current limiting latching circuit and an alarm signal is sent to the microprocessor. After a certain time, for example 1 sec., a reset pulse is sent from the microprocessor to the current-limiting latching circuit. At that time, if the current is below the limit value, the voltage regulator is switched on, but if the current is still too high, an additional alarm signal is sent to the microprocessor accompanied with a reset pulse. This is repeated as long as the overcurrent is still there. When the overcurrent has disappeared, the LNB regulator is again switched on. When the current-limiting latching circuit is triggered owing to far too high current intensity detected, the LNB voltage regulator is thus switched off. The regulator is again switched on when the current value is normal, after which a regulated LNB voltage is fed out to the outdoor unit.

So, the advantage of the invention is that the power supply of the microprocessor can be kept going on uninterruptedly from the power supply unit, for example 5 volt, and not be discontinued, although the overcurrent protection is triggered.

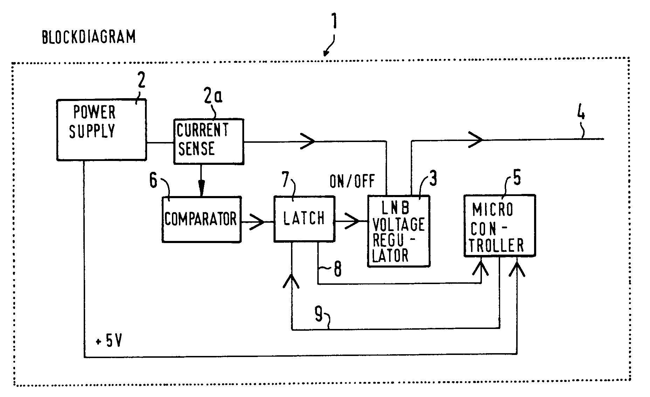

Now, an embodiment of the invention will be described by means of a drawing, in which:
The Figure indicates a block diagram of the protector circuit in a satellite receiver according to the invention.

In the Figure the block 1 indicates the power supply of a satellite receiver and an LNB drive device. 2 indicates a power supply unit for the supply of an LNB voltage regulator 3 or a switching unit from which the voltage is supplied for the operation of the outdoor unit, i.e. LNB 4.
2a shows a current sensing element at the output of the power supply unit 2. Alternatively, a current sensing element could also be arranged in the ground lead of power supply 2. Also, the power supply unit 2 supplies a microprocessor 5, for example with 5 volts. According to the invention a current-limiting comparator 6 is connected to the current sensing unit 2a, this comparator 6 compares the current with a given limit value. If the value is exceeded a current-limiting latching circuit 7 is triggered switching off the voltage regulator 3 or the switching unit, and the latching circuit sends a current-limiting alarm 8 to the microprocessor unit 5 which is arranged to send a reset pulse 9 to the current-limiting latching circuit 7 after a certain time, for example 1 sec. A new alarm signal 8 is transmitted if the current is still too high and the reset procedure is repeated. On the other hand, if the current is below the limit value, the voltage regulator 3 is reconnected and a regulated voltage is supplied to the LNB.

The disclosed diagram of connection is only indicated schematically and it is obvious to a person skilled in the art that other components and units can be included in the system and that the protection can be used for other types of receivers within the scope of the invention.

## Claims

1. An overcurrent protector in a satellite receiver or the like, which receiver includes a power supply unit (2) which is arranged to supply a voltage regulator (3) or a switching unit (3) for the operation of, for example, an LNB (4) as well as a microprocessor (5), **characterized in** that the power supply unit (2) is arranged to continue the operation of the microprocessor (5) in case of an overcurrent in the LNB supply, but switch off the voltage regulator (3) or the switching unit (3) via a current-limiting latching circuit (7).

2. An overcurrent protector according to claim 1, **characterized in** that the current-limiting latching circuit (7) is arranged to send an alarm signal to the microprocessor (5) in case of an overcurrent detected, the microprocessor being arranged to send a time delayed reset pulse to the current-limiting latching circuit (7) in order to switch the voltage regulator (3) on, if the current is below a determined limit value at this time.

3. An overcurrent protector according to any of the claims 1 - 2, **characterized in** that a current-limiting comparator (6) is connected between the current supply unit (2) and the current-limiting latching circuit (7).
